# EUROPEAN PATENT APPLICATION

(11) **EP 0 838 632 A2**
(43) Date of publication of application: **29.04.1998**
(21) Application number: 97850145.0
(22) Date of filing: 22.10.1997
(51) Int. Cl.: F22B 1/00, F22B 3/04

(54) **Method and device for production of steam power**

(30) Priority: 22.10.1996 SE 9603879
(71) Applicant: Kullendorff, Anders, 413 14 Göteborg (SE)
(72) Inventor: Kullendorff, Anders, 413 14 Göteborg (SE)
(74) Representative: Westman, Per Börje Ingemar

(57) **Abstract**

Method and device for production of steam power from a plant for hot water production, and of the type incorporating a hot water boiler (1) with a circulation pipe (3, 3a, 6, 3b) and a heat exchanger (5) for transfer of heat energy from hot water, whereby at least a portion of the hot water discharged from the hot water boiler (1) to the circulation pipe is subjected to a pressure relief in a chamber (9) having such a volume that thereby a portion of hot water introduced into said chamber is transferred to steam form, that the steam thereby generated is transferred to a steam expansion device, e.g. a turbine (11) for generating steam power, and which steam after discharge from the turbine is subjected to condensation, whereupon the condensate is subjected to a pressure increase and thereupon is fed into the circulation pipe (3b) of the hot water boiler.

## Description

The present invention refers to a method and a device for production of steam power.

During later years it has for different reasons been built a number of hot water boilers, which are considerably cheaper than corresponding boilers for production of steam.

With increasing wishes for steam production for generating steam power by means of turbine there is also an increase in the demand for substituting or rebuilding earlier boilers intended for generation of hot water. This for producing steam, e.g. for steam turbine or steam motor and heat from the condensate.

A rebuilding of the older hot water boilers into steam boilers is expensive and for that reason is suggested a method and a device in accordance with the present invention for conversion of a conventional hot water boiler for production of steam power with turbine, and this has been achieved with a method according to the characterizing portion of the accompanying claim 1, and with a device which is characterized by the features of claim 4.

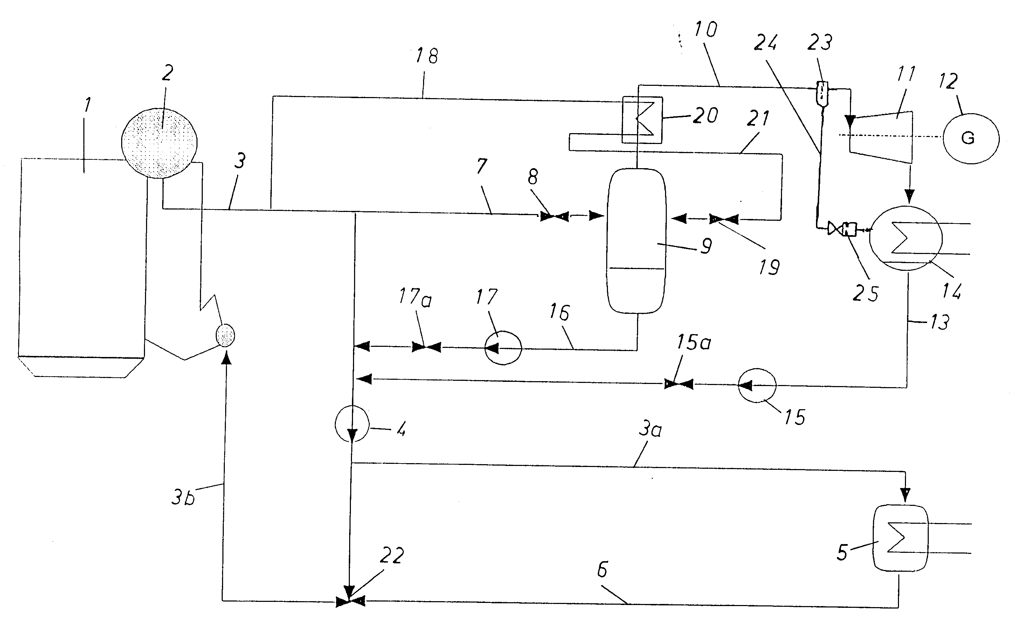

Hereinafter the invention will be further elucidated with reference to the coupling diagram schematically illustrated in the accompanying drawing.

The drawing figure shows schematically and in the shape of a coupling diagram, a plant in accordance with the invention, which incorporates a substantially conventional hot water boiler 1, which via a circulation system 3 emanating from the boiler dome 2 and with a boiler circulation pump 4 connected thereto communicates with a district heat exchanger 5 via a pipe portion 3a. A return water pipe 6 leads back from the district heat exchanger 5 to the return portion 3b of the circulation system of the hot water boiler. In so far the plant corresponds substantially to a conventional district heating plant with a hot water boiler connected to a district heating network. Between the pipes 3, 6 and 3b is provided a control valve 22, which controls the system thus that correct effect can be taken out of the boiler 1 and be delivered to the district heating network.

There is further, in accordance with the invention, before the position for the boiler circulation pump 4 connected a branch pipe 7, which via a restriction valve 8 communicates with a pressure relief vessel, a so called flash box 9. From the flash box 9 emanates a steam pipe 10 to a steam turbine 11, which in turn is connected to a generator 12. A return pipe 13 emanates from the generator 11 and communicates, via a condenser 14 and a circulation pump 15 connected thereafter, with the return pipe 3b of the hot water boiler. From the flash box 9 emanates also a return water pipe 16, which via a pump 17 communicates with the return pipe 3b of the hot water boiler.

In the embodiment shown is further connected a pipe 18 between the circulation pipe 3 and the restriction valve 8, and which is provided with a heat exchanger 20 connected to the steam pipe 10 from the flash box 9 and having a return pipe 21, which in turn via a stop valve 19 is connected to the circulation pipe after the position for the branch pipe 7.

During operation of the plant a commonly constant hot water flow is taken out via the circulation pipe 3, and having an appropriate saturation pressure, e.g. 16 bar absolute. This saturated hot water is pumped by means of the pump 4 via the pipes 3a, 6 and 3b directly through the district heat exchanger 5, wherein heat is emitted to a district heating network. Via the valve 8 and the pipe 7 the flow of hot water (larger or smaller content) can reach a pressure relief vessel or a flash box 9, after the pressure has first been restricted to an appropriate level in the valve 8 thus that steam and water is generated at the current pressure of e.g. 11 bar.

The volume in the flash box 9 is sufficient for adjustment of the water level, whereby the pump 17 via the pipe 16 feeds back flash water to the circulation pipe 3b. The pump 17 is speed controlled or controlled by restriction via the valve 17a, which is connected thereafter, in order to give a suitable level within ranges in the flash box 9. Steam that has been generated at the pressure relieving process in the flash box 9 leaves this via the steam pipe 10 and is transferred to the turbine 11, where it is allowed to expand to condenser pressure. The steam that has passed the turbine is transferred to the condenser 14 where it will condense. The condenser is kept at a suitable temperature and a proper pressure, thus that the heat emitted can be utilized, e.g. for district heating or for other process purposes. The condensate is pumped via the pipe 13 by means of the pump 15 back to the circulation system 3 of the boiler. The condenser is subjected to level regulation by means of the speed controlled pump 15 or a restriction adjustment 15a provided after the pump in the pipe 13.

The steam generated at the pressure relief in the flash box 9 may as an alternative be overheated/dried by being supplied with heat from a heat exchanger 20 connected to the pipe 10, which heat exchanger via the pipe 18 which is equipped with a valve 19, is fed with hot water directly from the circulation system 3 and from a point in front of the valve 8, and the return pipe 21 of which leads the hot water that has passed the heat exchanger 20 back to the circulation system 3, preferably at a point after the valve 8.

Between the heat exchanger 20 and the turbine 11 is also connected a steam trap 23, which via a pipe 24 and a valve 25 leads water that has been carried along by the steam to the condenser 14 past the turbine in order to protect this.

A superheater unit of more normal design can eventually be integrated in the very hot water boiler 1, which means a certain, but modest rebuilding of the hot water boiler. In this case the steam generated in the flash box 9 is led, via a pipe not shown in the accompanying drawing, directly back to the hot water boiler for overheating before it is transferred to the turbine.

As an example, which might not be considered as limiting for the protective scope of the invention, at a hot water boiler e.g. of 12 mW, a saturated hot water at a temperature of 201.4°C can leave the dome 2 of the boiler at a pressure of 16 bar. When entering the flash box 9 the pressure is lowered down to 11,25 bar, which gives a saturated steam at a temperature of 181.5°C when exiting from the flash box. The volume of the hot water which has been fed into the flash box and leaves this in form of steam is about 3.5%, whereas the hot water leaving the flash box at about 11 bar is 96.5% of the hot water delivered from the boiler. The hot water emanating from the flash box 9 is carried back to a pressure of about 16 bar by means of the pump 17, and the condensate leaving the condenser 14 at a pressure of e.g. 1 bar has a temperature of about 98°C. Via the pump 15 the pressure of the condensate is increased thus that this is returned via the pipe 13 as hot water into the circulation system 3 of the boiler at a pressure of about 16 bar. The condenser thus can be at atmospheric pressure, but it can also be at a lower pressure, which corresponds e.g. to the return water temperature from a district heating network.

The content of 3.5% of the medium that has been fed into the flash box, which leaves this as steam, may alternatively be superheated as a symbolic superheating to between 190 and 195 °C by means of the heat exchanger 20 or by means of a superheater unit, which has alternatively been built into the boiler.

By means of the plant described above and shown as an example in the accompanying drawing and by means of the also described method it is possible beside the production of hot water, also to generate a considerable volume of steam for use as a steam power source, by means of a conventional, and comparatively inexpensive hot water boiler with only little complimentary equipment or auxiliary equipment.

The invention is not limited to the embodiment illustrated above but modifications and variants are possible within the scope of the appended claims. Thus the superheater system 18-21 or the like is not necessary for the desired function of the plant and even if the plant has been described as a hot water plant for district heat production it is possible alternatively to utilize the hot water for other heating purposes.

## Claims

1. Method for production of steam power from a plant for hot water production, and of the type incorporating a hot water boiler (1) with a circulation piping (3, 3a, 6, 3b) and a heat exchanger (5) for transfer of heat energy from hot water,
**characterized therein**,
that at least a portion of the hot water discharged from the hot water boiler (1) to the circulation pipe is subjected to a pressure relief in a chamber (9) having such a volume that thereby a portion of hot water introduced into said chamber is transferred to steam form,
that the steam thereby generated is transferred to a steam expansion device, e.g. a turbine (11) for generating steam power,
that the steam after discharge from the turbine is subjected to condensation, and
that the condensate is subjected to a pressure increase and thereupon is fed into the circulation pipe (3b) of the hot water boiler.

2. A method as claimed in claim 1,
**characterized therein**,
that the pressure relief of the hot water that is fed into the pressure relief chamber (9) is driven so far, that a content of the hot water corresponding to at least 10% is transferred to steam.

3. A method as claimed in claim 1 or 2,
**characterized therein**,
that the steam generated in the pressure relief chamber (9) is subjected to superheating/drying before it reaches the turbine (11).

4. A device for production of steam power from a plant for hot water production, and of the type which incorporates a hot water boiler (1) having a circulation piping (3, 3a, 6, 3b) and a heat exchanger (5) for transfer of heat energy from the hot water, in accordance with the method as claimed in claim 1,
**characterized therein**,
that the circulation pipe (3) of the hot water boiler is equipped with a connectable pipe (7), which communicates with the introduction side of a pressure relief vessel (9), provided with a return pipe (16) leading from the discharge side of the vessel and back to the circulation pipe (3), intended for pressure relieved hot water and an outlet pipe (10) for steam generated at the pressure relief in the vessel, whereby the steam outlet pipe (10) is connected to a means (11) for generating steam power, e.g. a turbine or a steam motor, and a condenser (14) provided thereafter in a condensate pipe (13), which in turn opens in the circulation pipe (3) of the hot water boiler.

5. A device as claimed in claim 4,
**characterized therein**,
that the means for generating steam power is a steam turbine, a steam motor or the like (11).

6. A device as claimed in claim 4 or 5,
**characterized therein**,
that means (17) for increasing the pressure in the return pipe substantially to the same pressure as in the circulation pipe (3) are connected to the return pipe (16) from the pressure relief vessel (9).

7. A device as claimed in anyone of claims 4 to 6
**characterized therein**,
that means (15) for increasing the pressure in the condensate pipe to substantially the same pressure as in the circulation pipe(3) are connected to the condensate pipe (13) from the condenser (14).

8. A device as claimed in anyone of claims 6 or 7,
**characterized therein**,
that each of said means (17; 15) for increasing the pressure is constituted by a pump.

9. A device as claimed in anyone of claims 4-7,
**characterized thereIn**,
that the steam pipe (10) after the pressure relief vessel (9) but before the means for generating steam power or the turbine (11) is provided with a heat exchanger (20) for superheating/drying of the steam discharged from the vessel (9).

10. A device as claimed in claim 9,
**characterized therein**,
that the heat exchanger (20) for superheating/drying of the steam discharged from the vessel (9) is part of a system (18,19,21) connected to the circulation system (3) of the hot water boiler in such a manner that it bridges the connection position for the feed-in pipe (7) to the pressure relief vessel (9).
